# EUROPÄISCHE PATENTANMELDUNG

(11) **EP 1 096 356 A2**
(43) Veröffentlichungstag der Anmeldung: **02.05.2001**
(21) Anmeldenummer: 00119400.0
(22) Anmeldetag: 12.09.2000
(51) Int. Cl.: G05G 1/14, B60K 26/02

(54) **Pedalanordnung für ein Kraftfahrzeug, insbesondere Brems- oder Kupplungspedal**

(30) Priorität: 29.10.1999 DE 19952236
(71) Anmelder: Volkswagen Aktiengesellschaft, 38436 Wolfsburg (DE)
(72) Erfinder: Stindel, Olaf, 38100 Braunschweig (DE); Sinnhuber, Ruprecht Dipl.-Ing., 38518 Gifhorn (DE)

(57) **Zusammenfassung**

Es sind Pedalanordnungen für ein Kraftfahrzeug, insbesondere Brems- oder Kupplungspedalanordnungen, mit einem Pedal (1, 19), das an einer Führung (7, 27) in Fahrzeuglängsrichtung verfahrbar ist, bekannt. Nachteilig bei diesen Pedalanordnungen ist, daß das Pedal (1, 19) lediglich in Horizontalrichtung verfahrbar ist und somit immer ein gleichbleibender Abstand einer Trittplatte (2, 20) zum Bodenblech vorhanden ist. Kleinere Fahrer haben aber im allgemeinen auch kürzere Füße, so daß sie einen geringeren Abstand der Trittplatte (2, 20) zum Bodenblech benötigen. Zu Vermeidung dieses Nachteils ist die erfindungsgemäße Pedalanordnung dadurch gekennzeichnet, daß die Führung (7, 27) in vertikaler Fahrzeuglängsebene schwenkbar ist.

## Beschreibung

Die Erfindung betrifft eine Pedalanordnung für ein Kraftfahrzeug, insbesondere Brems- oder Kupplungspedalanordnung, mit einem Pedal, das an einer Führung in Fahrzeuglängsrichtung verfahrbar ist.

Eine solche Pedalanordnung ist durch die EP 0 363 546 A1 bekannt geworden. Bei der darin gezeigten Pedalanordnung sind sowohl das obere Schwenklager als auch das untere Schwenklager gemeinsam und synchron zueinander verschiebbar. Hierdurch ist es möglich, die Position des Pedals zum Kraftfahrzeugführer (Fahrer) auf die Körpergröße des Fahrers einzustellen. Hierzu reicht nämlich ein alleiniges Verstellen der Sitzposition oft nicht aus, da sehr kleine Fahrer häufig bereits mit dem Oberkörper sehr nahe am Lenkrad sitzen, um die Pedale gerade noch erreichen zu können. Die vorgenannte Verstellmöglichkeit der Pedale ermöglicht es auch kleinen Fahrern, einen bequemen Sitzabstand zum Lenkrad einzunehmen und sodann die Pedale, soweit erforderlich, an sich heranzuholen. Nachteilig bei der vorbeschriebenen Pedalverstellung ist aber, daß die Pedale immer genau horizontal verfahren werden und somit der vertikale Abstand zwischen den Pedalen und dem Bodenblech konstant bleibt. In einigen Kraftfahrzeugen steigen die Bodenbleche nach vom hin, also vom Fahrer weg, leicht an, was zu einer Vergrößerung des vertikalen Abstands zwischen Bodenblech und dem Pedal bei Heranholen des Pedals an den Fahrer führt. Diese ist deshalb nachteilig, weil kleine Fahrer in der Regel auch über kleinere Füße, sprich kleinere Schuhgrößen verfügen. Um das Pedal gut mit dem Fuß erreichen zu können, müssen sehr kleine Fahrer daher häufig den Haken vom Bodenblech abheben und mit eigener Muskelkraft den Fuß tragen. Legen sie den Haken auf das Bodenblech auf, erreichen sie das Pedal gerade noch mit den Fußspitzen. Dieses ist insbesondere bei einem ständig zu betätigen Gaspedal besonders ungünstig, weil dies zum 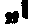 Einschlafen" der Beine führt. Diese unergonomische Fußhaltung führt auch zu einer insgesamt schnelleren Ermüdung des Fahrers, was entweder häufigere Pausen erforderlich macht oder andererseits zu einer Gefährdung der Verkehrssicherheit führt.

Aus der EP 0 256 466 A2 ist ebenfalls eine verstellbare Pedalanordnung bekannt, bei dem wiederum nur ein horizontales Verfahren des Pedals möglich ist.

Um die vorstehenden Nachteile zu umgehen, offenbart die DE 196 25 765 A1 eine Bodenhöhenverstelleinrichtung. Diese Bodenhöhenverstelleinrichtung wird auf dem Bodenblech des Kraftfahrzeugs montiert und verfügt über eine höhenverstellbare Plattform, um so den vertikalen Abstand zwischen der Trittplatte des Pedals und der Plattform einstellen zu können.

Hiervon ausgehend liegt der Erfindung das Problem zugrunde, eine Pedalverstellung vorzuschlagen, durch die eine ergonomisch günstige Pedalverstellung ermöglicht wird.

Zur Lösung dieses Problems ist die erfindungsgemäße Pedalverstellung dadurch gekennzeichnet, daß die Führung in vertikaler Fahrzeuglängsebene schwenkbar ist.

Erfindungsgemäß ist die Pedalanordnung an einer Führung verschiebbar aufgehängt, wobei die Führung in einer vertikalen Fahrzeuglängsebene schwenkbar ist. Der Fahrzeugfahrer kann somit den horizontalen Abstand des Pedals bzw. der Trittplatte des Pedals und auch die Höhe der Trittplatte über einem Bodenblech einstellen. Der Abstand des Pedals zum Fahrersitz wird dabei im wesentlichen durch Verfahren der Pedalaufhängung entlang der Führung und die Höhe durch Verschwenken der Führung eingestellt. Selbstverständlich verändert sich durch Schwenken der Führung aber auch der Abstand der Trittplatte zum Fahrersitz. Dennoch ist eine einfache und bequeme Justierung einer bequemen Pedalstellung, sprich Höhe und Abstand der Trittplatte, möglich.

Die Führung wird vorzugsweise mittels Spindeltrieb oder einem Druckmittelzylinder in der Fahrzeuglängsrichtung verfahrbar gelagert. Auch zum Verschwenken können Spindeltriebe, Druckmittelzylinder oder andere Drehantriebe vorteilhaft eingesetzt werden.

Nach einer ersten Ausgestaltung der Erfindung ist die Führung an einem Schwenkhebel angebracht, durch den die Führung in der vertikalen Fahrzeuglängsebene schwenkbar ist. An dem Schwenkhebel kann mittelbar oder unmittelbar ein Betätigungsorgan für eine Fahrzeugeinrichtung, beispielsweise für einen Hauptbremszylinder, einen Kupplungsgeberzylinder oder einen Gaszug, angebracht sein. An dem Schwenkhebel ist vorzugsweise auch ein Motor oder ein Druckmittelzylinder zum Längsverstellen des Pedals befestigt.

Nach einer weiteren Ausgestaltung der Erfindung ist die Führung verschwenkbar an einem Querrohr gelagert. Vorzugsweise ist die Führung dabei fest an einer das Querrohr rohrartig umgreifenden Muffe angebracht. Die Muffe ist ihrerseits entweder gegenüber dem Querrohr durch beispielsweise einen Stift gegen Verdrehen gesichert, so daß die Führung durch Verdrehen des Querrohres um seine Längsachse verschwenkt wird, oder drehbeweglich auf dem Querrohr gelagert. Im ersteren Fall kann bei Verwendung eines Stiftes als Verdrehsicherung dieser im Falle eines Verkehrsunfalls lösbar, insbesondere abscherbar, sein, um dem Pedal ein Verschwenken in Richtung zur Spritzwand zu ermöglichen. Hierdurch wird der Überlebensraum für den Fahrer im Beinbereich vergrößert.

Nach einer Weiterbildung der Erfindung ist das Pedal an einem Schlitten gelagert, der seinerseits an der Führung verschiebbar gelagert ist. An dem Schlitten könne auch alle für ein Kraftfahrzeug benötigten Pedale, also ein Bremspedal, ein Gaspedal und gegebenenfalls (bei Fahrzeugen mit Schaltgetriebe) ein Kupplungspedal, angebracht sein, die dann gemeinsam verschwenkt und/oder verfahren werden. Gegebenenfalls kann zusätzlich auch eine Fußablage für die linken Fuß des Fahrers an dem Schlitten befestigt sein.

Antriebsmittel für das Verschwenken und/oder Verfahren der Führung können vorzugsweise im Falle eines Verkehrsunfalls wirkungslos geschaltet werden, so daß das Pedal zur Spritzwand infolge von Fußkräften des Fahrers verschwenkt oder verfahren werden kann. Hierdurch wird eine Vergrößerung des Überlebensraums im Beinbereich des Fahrers und damit vermindertes Verletzungsrisiko erreicht. Als Antriebsmittel dienen, wie oben bereits angedeutet, vorzugsweise Elektromotoren oder Druckmittelzylinder.

Im Fall eines Verkehrsunfalls sollten Pedalbewegungen gedämpft erfolgen, um zusätzliche Stöße auf die Beine des Fahrers zu vermeiden. Zu diesem Zweck ist vorzugsweise vorgesehen, die Antriebsmittel als Dämpfer zu verwenden. Ein Elektromotor wird hierfür über einen Widerstand kurzgeschlossen und ein Druckmittelzylinder über eine Drossel geschaltet.

Die Erfindung wird nachfolgend anhand von in den Zeichnungen dargestellten Ausführungsbeispielen näher erläutert. Es zeigen:
- Fig. 1: ein erstes Ausführungsbeispiel für eine Pedalanordnung mit den Erfindungsmerkmalen,
- Fig. 2: ein zweites Ausführungsbeispiel eines Pedals mit den Erfindungsmerkmalen,
- Fig. 3: ein weiteres Ausführungsbeispiel eines Pedals mit den Erfindungsmerkmalen.

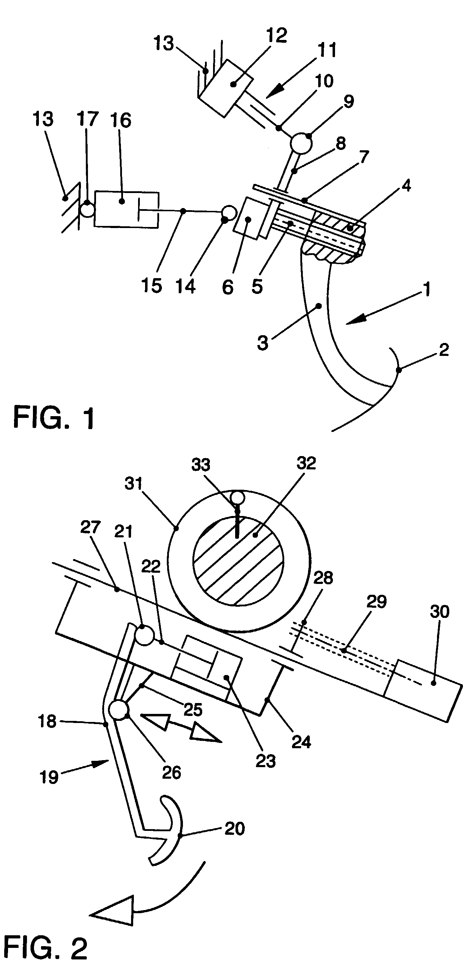

Die in Fig. 1 gezeigte Pedalanordnung 1 weist eine Trittplatte 2 und einen Hebel 3 auf, an dessen unterem, freien Ende die Trittplatte 2 fest angebracht ist. An seinem oberen Ende weist der Hebel 3 eine Spindelmutter 4 auf, die mit einer Gewindespindel 5 zusammenwirkt. Die Gewindespindel 5 ist durch einen Motor 6 um ihre Längsachse rotierend antreibbar. An der Spindelmutter 4 ist zusätzlich eine Führung 7 angebracht, die zur Aufnahme der beim rotierenden Antreiben der Gewindespindel 5 infolge Reibung entstehenden Drehmomente dient.

Der Motor 5 ist an einem Schwenkhebel 8 fest angebracht. Durch den Schwenkhebel 8 ist auch die Führung 7 zur Aufnahme der Drehmomente längsverschieblich hindurchgeführt. Am oberen Ende ist der Schwenkhebel 8 über ein Gelenk 9 mit einer Schwenkspindel 10 verbunden, die mit einer hülsenartigen Spindelmutter 11 zusammenwirkt. Die Spindelmutter 11 ist über einen weiteren Motor 12 um ihre Längsachse rotierend antreibbar. Der Motor 12 ist fest an der Fahrzeugkarosserie, nämlich einer Spritzwand 13, montiert.

Am Motor 6 ist über ein Gelenk 14 eine Bremsdruckstange 15 angebracht, die mit einem Hauptbremszylinder 16 zusammenwirkt. Der Hauptbremszylinder 16 ist wiederum über ein Gelenk 17 mit der Spritzwand 13 verbunden.

Alternativ muß die Bremsdruckstange 15 nicht unbedingt am Motor 6 befestigt sein, sondern kann auch direkt mit dem Schwenkhebel 8 verbunden werden. Darüber hinaus dient das Beispiel einer Bremsdruckstange 15 mit Hauptbremszylinder 16 nur als Beispiel. Eine identische Anordnung ist auch für den Einsatz als Kupplungspedal mit einem Kupplungsgeberzylinder und einer entsprechenden Druckstange einsetzbar. Ferner können auch mechanische Lösungen, beispielsweise für die Betätigung eines Gashebels, verwendet werden. Wofür die insoweit beschriebene Pedalanordnung letztlich dient, ist im Rahmen der Erfindung unerheblich. Wichtig ist die Art der Verstellung des Pedals 1 bzw. der Stellung der Trittplatte 2.

Soll nun, wie als vorliegendes Beispiel angegeben, eine Fahrzeugbremse und somit der Hauptbremszylinder 16 betätigt werden, tritt der Fahrer auf das Pedal 1 bzw. dessen Trittplatte 2. Hierdurch schwenkt der Schwenkhebel 8 zusammen mit dem daran befestigten Motor 6, der Gewindespindel 5 und dem Pedal 1 um das Gelenk 9. Die Bremsdruckstange 15 wird hierdurch in den Bremszylinder 16 gedrückt und so die Fahrzeugbremse betätigt.

Möchte ein kleiner Kraftfahrzeugfahrer das Pedal 1 bzw. die Trittplatte 2 näher an sich heranholen, betätigt er über entsprechende Schalter den Motor 6, so daß die Gewindespindel 5 rotierend angetrieben wird. Hierdurch wird die Spindelmutter 4 und damit das Pedal 1 entlang der Gewindespindel 5 verschoben. Je nach Neigung der Gewindespindel 5 verstellt sich dabei auch die Höhe der Trittplatte 2 zum Bodenblech. Wünscht der Kraftfahrzeugfahrer hier eine andere Höhe der Trittplatte 2 zum Bodenblech, so kann er dieses durch Betätigen des Motors 12 einstellen. Der Hebel 8 und damit die Gewindespindel 5 wird hierdurch in etwa um das Gelenk 14 verschwenkt und somit die Neigung der Gewindespindel 5 eingestellt.

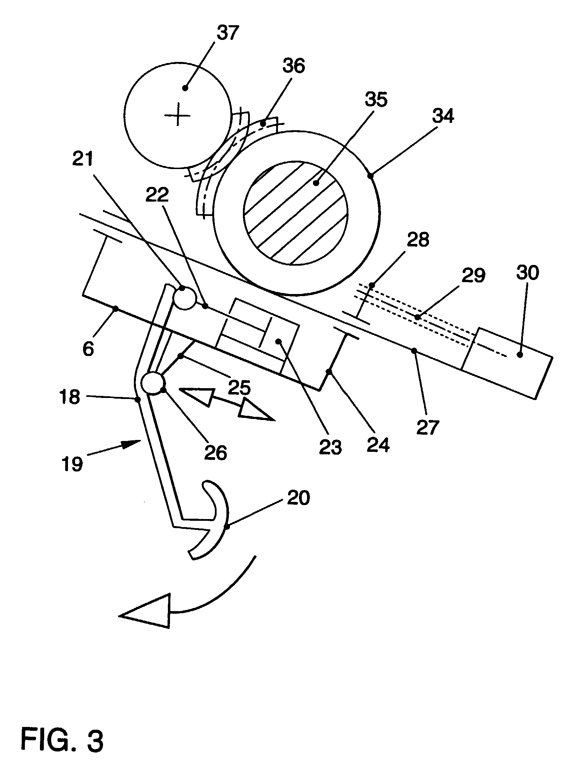

Die beiden Ausführungsbeispiele gemäß Fig. 2 und 3 sind sehr ähnlich aufgebaut. Sie unterscheiden sich im wesentlichen nur durch die Art einer Schwenkbetätigung. Die beiden Ausführungsbeispiele werden daher zunächst gemeinsam erläutert, wobei gleiches in Fig. 2 und 3 mit denselben Bezugsziffern bezeichnet ist.

Ein Hebel 18 eines Pedals 19 ist als zweiarmiger Hebel ausgebildet. An seinem unteren Ende trägt der Hebel 18 eine Trittplatte 20. An seinem oberen Ende ist der Hebel 18 über ein Gelenk 21 mit einer Bremsdruckstange 22 verbunden, die mit einem Hauptbremszylinder 23 zusammenwirkt. Bremsdruckstange 22 und Hauptbremszylinder 23 sind hier wiederum nur beispielhaft genannt. Genausogut können auch mechanische Betätigungen oder eine Druckstange mit einem Kupplungsgeberzylinder verwendet werden.

Das Pedal 19 ist zusammen mit dem Hauptbremszylinder 23 an einem gemeinsamen Schlitten 24 gelagert. Der Hauptbremszylinder 23 ist direkt am Schlitten 24 befestigt. Der Schlitten 24 weist zusätzlich einen Steg 25 auf, an dessen unterem Ende das Pedal 19 bzw. dessen Hebel 18 über ein Gelenk 26 schwenkbar angebracht ist. Der Schlitten 24 ist längsverschieblich auf einer Führung 27 gelagert. Ferner weist der Schlitten 24 eine Spindelmutter 28 auf, die mit einer Gewindespindel 29 zusammenwirkt, die um ihre Längsachse rotierend durch einen Motor 30 antreibbar ist. Der Motor 30 ist an der Führung 27 angebracht. Hierdurch kann der Schlitten 24 durch Betätigen des Motors 30 entlang der Führung 27 längsverschoben werden. Dabei nimmt die Führung 27 auch Spindelmomente auf.

Auch bei den beiden Ausführungsbeispielen gemäß Fig. 2 und 3 kann der Abstand des Pedals 19 bzw. dessen Trittplatte 20 zum Fahrersitz durch Längsverschieben des Schlittens 24 an der Führung 27 eingestellt werden. Um auch hier die Höhe der Trittplatte 20 über einem Bodenblech einstellen zu können, ist die Führung 27 wiederum schwenkbar ausgebildet. Die Schwenkantriebe unterscheiden sich dabei jeweils in den Ausführungsbeispielen gemäß Fig. 2 und 3.

Bei dem Ausführungsbeispiel gemäß Fig. 2 ist die Führung 27 fest, beispielsweise durch Schweißen, an einer Muffe 31 befestigt, die ein Querrohr 32 rohrartig umgreift. Die Muffe 31 und das Querrohr 32 sind über einen Scherstift 33 unverdrehbar gegeneinander gesichert. Das Verschwenken der Führung 27 erfolgt nun dadurch, daß das Querrohr 32 durch geeignete Antriebsmittel um seine Längsachse gedreht wird. Diese Drehung wird durch den Scherstift 33 auch auf die Muffe 31 übertragen, wodurch die Führung 27 verschwenkt wird.

Bei dem Ausführungsbeispiel gemäß Fig. 3 ist die Führung 27 ebenfalls fest, beispielsweise durch Schweißen, an einer Muffe 34 befestigt, die ein Querrohr 35 rohrartig umgreift. Die Muffe 34 ist im vorliegenden Fall jedoch gegenüber dem Querrohr 35 frei drehbar. Die Muffe 34 ist zumindest über einen Teil ihrer Mantelfläche (in Umfangsrichtung gesehen) mit einer Verzahnung 36 versehen, die mit einem Ritzel 37 zusammenwirkt. Das Ritzel 37 ist durch einen Motor um seine Längsachse rotierend antreibbar. Durch rotierendes Antreiben des Ritzels 37 wird die Drehung auf die Muffe 34 übertragen und hierdurch die Führung 27 verschwenkt. Selbstverständlich können hier auch geeignete Hebeltriebe zum Drehen der Muffe 34 auf dem Querrohr 35 alternativ eingesetzt werden.

Durch die beschriebene Ausgestaltung der Ausführungsbeispiele gemäß Fig. 2 und 3 eignen sich diese Ausführungsbeispiele nicht nur für eine individuelle Aufhängung eines Pedals. Vielmehr können alle für ein Kraftfahrzeug benötigten Pedale, also ein Gaspedal, ein Bremspedal und gegebenenfalls ein Kupplungspedal nebeneinander am Schlitten 24 befestigt und entsprechend gemeinsam verschwenkt bzw. verfahren werden. Gegebenenfalls kann an dem Schlitten 24 auch eine Fußablage für den während der normalen Fahrt nicht benötigten linken Fuß des Kraftfahrzeugfahrers angebracht und ebenso mitverfahren und verschwenkt werden.

Das Ausführungsbeispiel gemäß Fig. 1 eignet sich insbesondere für die individuelle Lagerung einzelner Pedale, wodurch auch eine individuelle Verstellung der Pedalposition möglich ist. Dieses ist aber auch bei den Ausführungsbeispielen gemäß Fig. 2 und 3 im Prinzip möglich, wenn hier einzelne Pedale aufgehängt werden.

Die insoweit beschriebenen Anordnungen eignen sich aber nicht nur für eine aktive Verstellung der Pedalposition zur verbesserten Ergonomie für den Kraftfahrzeugfahrer, sondern auch zu einer Verstellung der Pedale bei einem Verkehrsunfall, um den Überlebensraum im Fußraum zu erhöhen bzw. eine Intrusion der Pedale in den Fußraum, also ein Schwenken zum Kraftfahrzeugführer hin, zu vermeiden.

Bei dem Ausführungsbeispiel gemäß Fig. 1 bietet es sich zu diesem Zweck an, die Steigung der Verstellspindel 10 und entsprechend der Spindelmutter 11 nicht selbsthemmend auszubilden, so daß bei Ausüben einer erhöhten Fußkraft auf die Trittplatte 2 infolge eines Verkehrsunfalls die Spindelmutter 11 auf der Verstellspindel 10 rotieren und so das Pedal 1 zur Spritzwand nach vor hin verschwenkt werden kann. Durch entsprechende Crashsensoren kann die Stromversorgung für den Motor 12 unterbrochen werden, so daß die Spindelmutter 11 mehr oder weniger frei rotieren kann. Die Reibung der Spindelmutter 11 gegenüber der Verstellspindel 10 dient dabei gleichzeitig als Dämpfung für das Nachvomeschwenken des Pedals 1. Falls eine zusätzliche Dämpfung erforderlich ist, kann der Motor 12 durch den Crashsensor als Generator umgepolt und über einen Widerstand kurzgeschlossen werden, so daß hier weitere Energie vernichtet wird.

Bei dem Ausführungsbeispiel gemäß Fig. 2 ist vorgesehen, daß im Falle eines Verkehrsunfalls und dadurch bedingter erhöhter Fußkraft auf die Trittplatte 20 der Scherstift 33 abschert. Das Pedal 19 kann nun frei nach vorne zur Spritzwand weggeschwenkt werden. Eine Dämpfung der Schwenkbewegung kann hier durch Reibung der Muffe 31 auf dem Querrohr 32 bereitgestellt werden. Gegebenenfalls können aber auch zusätzliche Dämpfer vorgesehen sein. Ferner ist es alternativ denkbar, anstelle eines Scherstiftes 33 einen pyrotechnisch oder magnetisch lösbaren Arretierstift zu verwenden, der mittels eins Crashsensors betätigt wird.

Bei dem Ausführungsbeispiel gemäß Fig. 3 kann, gesteuert durch einen Crashsensor, der Motor 30 stromlos geschaltet werden, so daß das Pedal 19 zur Spritzwand hin infolge Fußkraft geschwenkt wird. Zur Dämpfung kann wiederum Reibung zwischen der Muffe 34 und dem Querrohr 35 dienen. Vorzugsweise wird aber der das Ritzel 37 antreibende Motor als Generator umgepolt und über einen Widerstand zur Dämpfung kurzgeschlossen. Letzteres geschieht aufgrund von Signalen eines Crashsensors.

Selbstverständlich können anstelle der in den Fig. 1 bis 3 dargestellten Spindeltriebe auch hydraulische oder pneumatische Kolbenzylindereinheiten zum Verfahren bzw. Verschwenken der Pedale 1, 19 eingesetzt werden. Auch hier können die Kolbenzylindereinheiten mittels einer entsprechenden Drossel im Falle eines Verkehrsunfalls als Dämpfer dienen.

### BEZUGSZEICHENLISTE

- 1: Pedalanordnung
- 2: Trittplatte
- 3: Hebel
- 4: Spindelmutter
- 5: Gewindespindel
- 6: Motor
- 7: Führung
- 8: Schwenkhebel
- 9: Gelenk
- 10: Schwenkspindel
- 11: Spindelmutter
- 12: Motor
- 13: Spritzwand
- 14: Gelenk
- 15: Bremsdruckstange
- 16: Hauptbremszylinder
- 17: Gelenk
- 18: Hebel
- 19: Pedalanordnung
- 20: Trittplatte
- 21: Gelenk
- 22: Bremsdruckstange
- 23: Hauptbremszylinder
- 24: Schlitten
- 25: Steg
- 26: Gelenk
- 27: Führung
- 28: Spindelmutter
- 29: Gewindespindel
- 30: Motor
- 31: Muffe
- 32: Querrohr
- 33: Scherstift
- 34: Muffe
- 35: Querrohr
- 36: Verzahnung
- 37: Ritzel

## Patentansprüche

1. Pedalanordnung für ein Kraftfahrzeug, insbesondere Brems- oder Kupplungspedalanordnung, mit einem Pedal (1, 19), das an einer Führung (7, 27) in Fahrzeuglängsrichtung verfahrbar ist, **dadurch gekennzeichnet**, daß die Führung (7, 27) in vertikaler Fahrzeuglängsebene schwenkbar ist.

2. Pedalanordnung nach Anspruch 1, dadurch gekennzeichnet, daß die Führung (7, 27) durch einen Spindeltrieb (4, 5; 28, 29) oder einen Druckmittelzylinder in der Fahrzeuglängsrichtung verfahrbar ist.

3. Pedalanordnung nach Anspruch 1 oder 2, dadurch gekennzeichnet, daß die Führung (7) an einem Schwenkhebel (8) angebracht ist, durch den die Führung (7) in der vertikalen Fahrzeuglängsebene schwenkbar ist.

4. Pedalanordnung nach Anspruch 3, dadurch gekennzeichnet, daß der Schwenkhebel (8) durch einen Spindeltrieb (10, 11) oder einen Druckmittelzylinder betätigbar ist.

5. Pedalanordnung nach Anspruch 3 oder 4, dadurch gekennzeichnet, daß an dem Schwenkhebel (8) mittelbar oder unmittelbar ein Betätigungsorgan (15) für eine Fahrzeugeinrichtung, insbesondere für einen Hauptbremszylinder (16), einen Kupplungsgeberzylinder oder einen Gaszug, angebracht ist.

6. Pedalanordnung nach einem der Ansprüche 3 bis 5, dadurch gekennzeichnet, daß an dem Schwenklager (8) ein Motor (6) oder ein Druckmittelzylinder zum Längsverstellen des Pedals (1) befestigt ist.

7. Pedalanordnung nach Anspruch 1 oder 2, dadurch gekennzeichnet, daß die Führung (27) verschwenkbar an einem Querrohr (35) gelagert ist.

8. Pedalanordnung nach Anspruch 7, dadurch gekennzeichnet, daß die Führung fest an einer das Querrohr (35) rohrartig umgreifenden Muffe (31) angebracht ist.

9. Pedalanordnung nach Anspruch 7 oder 8, dadurch gekennzeichnet, daß die Führung durch Verdrehen des Querrohres (35) um deren Längsachse verschwenkbar ist.

10. Pedalanordnung nach Anspruch 9, dadurch gekennzeichnet, daß die Muffe (31) gegenüber dem Querrohr (35) durch einen Stift (33) gegen Verdrehen gesichert ist, wobei der Stift (33) im Falle eines Verkehrsunfalls lösbar ist.

11. Pedalanordnung nach Anspruch 8, dadurch gekennzeichnet, daß die Muffe (31) zum Verschwenken der Führung (27) drehbeweglich auf dem Querrohr (35) gelagert ist.

12. Pedalanordnung nach einem der Ansprüche 1 bis 11, dadurch gekennzeichnet, daß an der Führung (27) ein Schlitten (24) für das Pedal (1) verschiebbar gelagert ist.

13. Pedalanordnung nach Anspruch 12, dadurch gekennzeichnet, daß an dem Schlitten (24) ein Bremspedal, ein Gaspedal und gegebenenfalls ein Kupplungspedal gelagert ist.

14. Pedalanordnung nach einem der Ansprüche 1 bis 13, dadurch gekennzeichnet, daß Antriebsmittel für das Verschwenken und/oder Verfahren der Führung (7, 27), insbesondere Elektromotor (12, 37; 6, 30) oder Druckmittelzylinder, wirkungslos geschaltet werden können, um im Falle eines Verkehrsunfalls ein Verschwenken des Pedals (1, 19) zu einer Spritzwand hin zu ermöglichen.

15. Pedalanordnung nach Anspruch 14, dadurch gekennzeichnet, daß das Antriebsmittel im Fall eines Verkehrsunfalls als Dämpfer für die Schwenkbewegung des Pedals (1, 19) zur Spritzwand hin wirkt.

16. Pedalanordnung nach Anspruch 15, dadurch gekennzeichnet, daß zur Dämpfung ein Elektromotor (12, 37) über einen Widerstand kurzgeschlossen und ein Druckmittelzylinder über eine Drossel geschaltet wird.
